# EUROPEAN PATENT SPECIFICATION

(11) **EP 3 508 072 B1**
(45) Date of publication and mention of the grant of the patent: **01.11.2023**
(21) Application number: 19150011.5
(22) Date of filing: 02.01.2019
(51) Int. Cl.: A23L 13/00, A22C 7/00, A47J 27/20, B65B 25/22

(54) **METHOD FOR COOKING A HAM AND DEVICE THAT IS USABLE IN SAID METHOD**
VERFAHREN UND VORRICHTUNG ZUM KOCHEN VON SCHINKEN
PROCÉDÉ ET DISPOSITIF POUR LA CUISSON DU JAMBON

(30) Priority: 05.01.2018 IT 201800000573
(43) Date of publication of application: 10.07.2019
(73) Proprietor: VE.MA.C. Societa' A Responsabilita' Limitata, 41051 Castelnuovo Rangone (MO) (IT)
(72) Inventor: COSTANTINI, Maurizio, 41057 Spilamberto (MO) (IT); VEZZALI, Franco, 41057 Spilamberto (MO) (IT); MALAGOLI, Uliano, 41041 Formigine (MO) (IT)
(74) Representative: Luppi Intellectual Property S.r.l.

(56) References cited:
- EP-A1- 1 623 659
- WO-A1-96/10337
- CN-U- 203 789 050
- FR-A1- 2 215 172
- FR-A1- 2 505 297
- FR-A1- 2 760 327
- FR-A1- 2 798 825
- FR-A2- 2 525 440
- NL-A- 7 605 070

## Description

The present invention relates to a method for cooking a ham and a device that is usable in said method.

A ham can be cooked in different ways, mainly linked to the quality of the finished product that it is desired to obtain.

A cooked ham is obtained from a leg of pork that is first deboned, and from which rind and excess fat is removed.

The leg is then cured, in special curing injection machines, which inject a so-called brine into the meat, i.e. a mixture of water, salt and additives such as, for example, polyphosphates, nitrites, animal proteins, sugars, wine, aromas, etc.

The quantity and the composition of the brine used depend on the weight of the ham to be cooked and on the quality of the end product that it is desired to obtain.

After the brine has been injected, the ham is subjected to so-called "churning" in special machines known as churns, in which the ham is kept moving so that an action like a massage is exerted thereupon, which promotes uniform distribution of the brine in the mass of the ham.

Different cooking methods are known, on the basis of which cooked hams of low, medium and high quality can be obtained.

According to a first cooking method, after churning, the ham is inserted into metal containers for cooking, for example aluminium containers that are also known as moulds, a microperforated sheet of food paper being interposed between the ham and the mould, then the ham is deaerated and the container is closed with a pressure cover provided with springs, which compresses the ham inside the container, giving the ham a shape corresponding to the shape of the inside of the container.

A container of this type is disclosed, for example, in EP0722663.

The container, with the ham inside, is then placed in an oven in which the ham is cooked. During cooking, liquids exit the ham that partially come from the brine that has been injected into the ham and in part come from the meat itself.

The exit of said liquids is favoured by the pressure exerted by the pressure cover on the ham.

At the end of cooking, the ham is extracted from the container, inside which the liquids remain that exited during cooking. The ham, which, owing to the exit of liquids underwent a significant loss of weight, is then left to cool, packaged and subjected to pasteurization and is then placed in cartons for dispatch.

With this cooking procedure a high quality ham is obtained because the liquids that exited the ham are eliminated, remaining in the cooking mould.

The use of moulds for cooking ham nevertheless entails certain disadvantages because the moulds are expensive, heavy to handle and bulky.

Cooking methods are also known in which the ham is not placed in special metal cooking containers but is closed in a casing of plastics for food products that is sealed after a vacuum has been created therein.

The ham sealed in the aforesaid casing is then cooked in a special cooking oven.

After cooking, the ham, still closed in the aforesaid casing, is cooled to then be packaged and/or pasteurised.

During cooling, the liquids that during cooking exited the ham are reabsorbed so that the ham is not subject to weight loss.

The cooked ham that is thus obtained is a ham of low quality.

A cooking process of this type is disclosed, for example, in GB1446996.

According to one version of this cooking method, the ham, after cooling, is extracted from the casing and the gelatine is eliminated that formed on the surface of the ham, before proceeding with packaging and pasteurization. In this manner, it is possible to obtain a cooked ham of medium quality.

According to a further cooking method, the ham is sealed in a casing provided with side bags, which communicate with the inside of the casing. The ham sealed in said casing is then placed in moulds and sent for cooking. During cooking, the liquids that exit the ham collect in the side bags of the casing, such that they are not reabsorbed by the ham during cooling.

Cooking methods of this type are disclosed, for example, in EP1623659, FR2763572 and FR2776268.

With this cooking method, high quality hams are obtained, but there are high costs and overall dimensions, owing to the use of the moulds and the presence of the side bags of the casing that encloses the ham being cooked, which, at the end of cooking, have to be sealed and separated from the rest of the casing using suitable sealing and cutting devices, which cost affects the production costs of the cooked hams.

FR 2 525 440 A2 discloses a method for cooking a ham which comprises the following steps:
- inserting the ham in a rigid container made of polypropylene;
- inserting a spacing element on the ham, said spacing element being constituted by two flat plates rigidly connected with each other by means of a plurality of ribs, said spacing element acting as a cover of the rigid container;
- sealing the rigid container with a sheet of plastic material and creating a vacuum inside the rigid container during sealing;
- cooking the ham in a cooking apparatus.

FR 2 760 327 A1 discloses a method for cooking a ham which comprises the following steps:
- inserting a ham to be cooked in a first envelope of plastic material for foods permeable to liquids, for instance a heat shrinking material;
- sealing the first envelope thightening the ham inside the envelope:
- inserting the first envelope witht the ham inside in a second envelope impermeable to liquids made of a non heat shrinking material;
- sealing the second envelope in such a way as the second envelope does not adhere to the first envelop ;
- before sealing the second envelope, inserting a rigid spacing device between the first envelope and the second envelope, the spacing device consisting of a plurality of bars connected with each other by means of crossbars, said bars and crossbars keeping the seond envelope spaced from the first envelope;
- cooking the ham in a cooking apparatus.

FR 2 505 297 A1 discloses a method for cooking a ham which comprises the following steps:
- inserting a ham to be cooked in an envelope of plastic material for foods leaving the envelope open;
- inserting the envelope with the envelope inside in a rigid cooking vessel;
- inserting an intermediate cover on the ham;
- closing the cooking vessel with a cover configured to exrt a pressure on the ham via the intermediate cover;
- after cooing, sealing the envelope leaving the intermediate cover inside the envelope.

EP 1 623 659 A1 discloses a descrive a mould for cooking hams which comprises a container consisting of a casing with vertical walls, a bottom which is not connected to the side walls and a base. Between the side walls and the base some springs are interposed, whilst a further spring is interposed between the bottom and the base. The casing and the bottom define a volume which is reduced pushing the casing downward by means of a cover which exerts a pressure on the casing. The casing may be moved vertically with respect to the bottom from a upper resting position to a lower position.

The volume defined by the casing and the bottom when the casing is the lower position is less than the volume defined by the casing and the bottom when the casing is in the upper resting position.

The ham may be inserted in teh casing after being vacuum sealed in an envelope of plastic material provided with a pocket in which the liquids exiting the ham during cooking are collected.

After inserting the ham into the container, a cover is applied which exerts a pressure on the casing pushing it downward against the action of the springs, whilst the bottom remain pushed upward by further spring.

The container with the ham inside is then put into a cooking apparatus. During cooling, the volume of the ham descreases, which causes the bottom to be lifted by the thrust of the further spring whilst the liquids exiting the ham are collected into the pocket.

NL 7 605 070 A discloses a mould for coocking hams in which a ham to be cooked may be introduced. The mould is provided with a cover which exerts a pressure on the ham. The mould may be sealed by welding a sheet of thermoplastic material to a flange of the mould.

FR 2 798 825 A1 discloses a single io multiple mould for cooking hams, which comprises a main volume in which a ham to be cooked is inserted, and one or more side volumes, separated from the main volume by means of baffles.

Before bieng introduced in the mould, an ham to be cooked is introduced in an thermoformed envelope which comprises a main chamber, whcih accomodates the ham, and one or two side chambers. The envelope is closed on the upper side by a film welded to a flange of the envelope. Passages are provided which are obtained by means of interruptions in the weld, said passages connecting the main chamber with the side chambers.

The mould is provided with a cover which is configured to exert a pressure on the ham introduced in the main volume of the mould.

When the cover has been fixed to the mould, the moould, with the ham inside, is introduced in a cooking apparatus.

During cooking the liquids exiting the ham pass from the main chamber to the siode chambers of the envelope.

FR 2 215 172 A1 discloses a a mould for cooking hams comprising a vessel, inside which a ham to be cooked is arranged, and a cover which may slide inside the vessel. The cover is connected by means of two rods to a crossbar which may slide on the rods. The cossbar is provided at its ends with arms provided with teeth by means of which the arms may be hooked to a flange of the vesssel. A spring is fitted on each rod.

After introducing the ham into the vessel, the cover is pushed against the ham exerting a pressure on the crossbar so as to compress the springs before hooking the arms to the flange of the vessel. The cover exerts therefore a pressure on the ham during cooking.

One object of the present invention is to provide a method for cooking hams that enables cooked hams of high quality to be obtained.

This object is achieved by a method according to claim 1.

A further object of the present object is to provide a device that enables the ham to be separated simply and inexpensively during cooking from the liquids that exit from the ham and said liquids to be eliminated easily after cooking. This further object is achieved by a device according to claim 7.

Owing to the invention, it is possible to obtain a high quality cooked ham by cooking the ham after sealing thereof in a casing made of plastics for foodstuffs obtained by means of thermoforming inside which the aforementioned device is placed, avoiding, at the end of cooking during cooling, the ham remaining in contact with the liquids that exited therefrom during cooking, so that the liquids are not reabsorbed by the ham and can be eliminated at the end of cooling. Owing to the invention it is possible to cook a ham using only the casing made of plastics for foodstuffs obtained by means of thermoforming inside which the aforementioned device and the ham are placed. The casing made of plastics is flexible and capable of being deformed. Furthermore, the casing made of plastics is inexpensive. The cooking assembly formed by the casing made of plastics, by the ham and by the device is extremely easy to handle as it is light and not bulky, in particular with respect to the moulds for cooking the hams of known type.

Owing to the invention it is therefore possible to avoid the use of metal moulds for cooking hams which are expensive, heavy to handle and bulky.

Further features and advantages of the invention are shown in the following description that is given merely by way of non-limiting example, with reference to the attached drawings, in which:
Figure 1 is a raised view of a casing made of plastics for foodstuffs, intended for receiving internally a ham to be cooked;
Figure 1A is a top view of the casing of Figure 1;
Figure 2 is a raised view of the casing of Figure 1, in which a ham to be cooked has been placed;
Figure 2A is a top view of Figure 2;
Figure 3 and 4 are raised views of a first embodiment of an elastic pressure device according to the invention, in two different operating configurations;
Figure 5 is a raised view of the casing of Figure 2, into which the elastic pressure device according to the invention illustrated in Figures 3 and 4 has been inserted;
Figure 5A is a top view of Figure 5;
Figure 6 is a raised view of the casing of Figure 5, which illustrates the sealing of the casing with a closing film;
Figure 6A is a top view of the sealed casing;
Figure 7 is a raised view of the overturned sealed casing, in the ham cooking position;
Figure 8 a raised view of the sealed casing, at the end of cooking of the ham, before opening and emptying;
Figure 9 illustrates the opening and emptying of the casing at the end of cooking of the ham;
Figures 10 and 11 are raised views of a second embodiment of an elastic pressure device according to the invention, in two different operating configurations;
Figure 12 is a raised view of the casing of Figure 2, into which the elastic pressure device according to the invention illustrated in Figures 10 and 11 has been inserted;
Figure 12A is a top view of Figure 12;
Figure 13 is a raised view of the casing of Figure 12, which illustrates the sealing of the casing with a closing film;
Figure 13A is a top view of the sealed casing;
Figure 14 is a raised view of the sealed casing, in the ham cooking position;
Figure 15 a raised view of the sealed casing, at the end of cooking of the ham, before opening and emptying;
Figure 16 illustrates the opening and emptying of the casing at the end of cooking of the ham;
Figure 17 is a raised view of a third embodiment of an elastic pressure device according to the invention;
Figure 18 is a top view of the elastic pressure device of Figure 17;
Figure 19 is a raised view of a component of the elastic pressure device of Figure 17;
Figure 20 is a top view of the component of Figure 19;
Figure 21 is a view of the elastic pressure device of Figure 17, rotated by 90° with respect to Figure 17, in a first operating configuration;
Figure 22 is a view like that of Figure 21, but with the elastic pressure device in a second operating configuration;
Figure 23 is a raised view of the casing of Figure 2, into which a ham to be cooked and the elastic pressure device according to the invention illustrated in Figures 17 to 22 have been inserted;
Figure 24 is a raised view of the casing of Figure 23, which illustrates the sealing of the casing with a closing film;
Figure 25 is a raised view of the sealed casing of Figure 24, introduced into a cooking mould;
Figure 26 is a view like that of Figure 25 that shows the sealed casing at the end of cooking of the ham, before opening and emptying

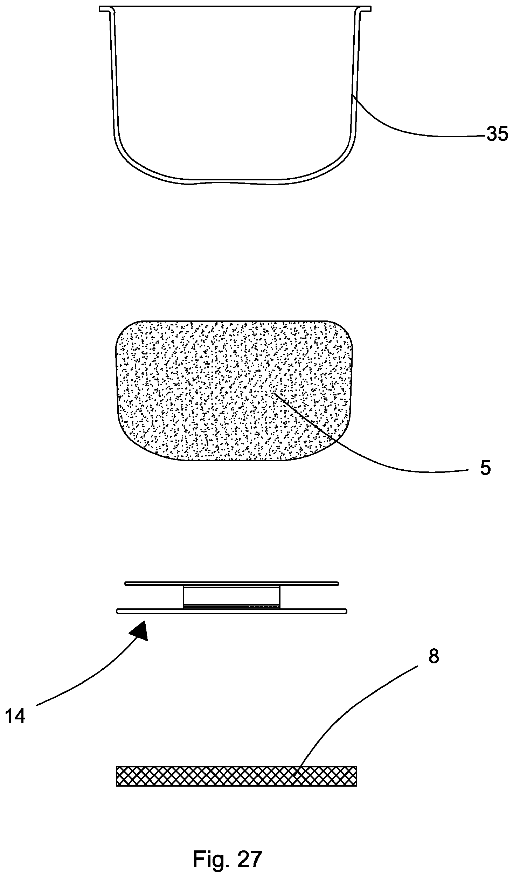

Figure 27 illustrates the opening and emptying of the casing of Figure 26 at the end of cooking of the ham;
Figure 28 illustrates a frame of the so-called "suspended rack" type that is movable along an overhead track, on which a plurality of hams has been loaded that are ready for being sent for cooking;
Figure 29 illustrates a further frame, which is movable on the ground by a catenary line, on which a plurality of hams that are ready for being sent for cooking has been loaded;
Figure 30 illustrates a frame that is identical to the frame of Figure 28, on which a plurality of hams have been loaded that are ready for being sent for cooking, each of which is inserted inside a respective cooking mould, the frame being provided with a contrasting element intended to interact with the cooking moulds and the hams contained therein;
Figure 31 is an enlarged detail of Figure 30;
Figure 32 illustrates a frame in which a plurality of mould elements is fitted, each of which comprises a plurality of cooking moulds into each of which ham to be cooked is inserted, the frame being provided with a contrasting element intended to interact with the cooking moulds and the hams contained therein.

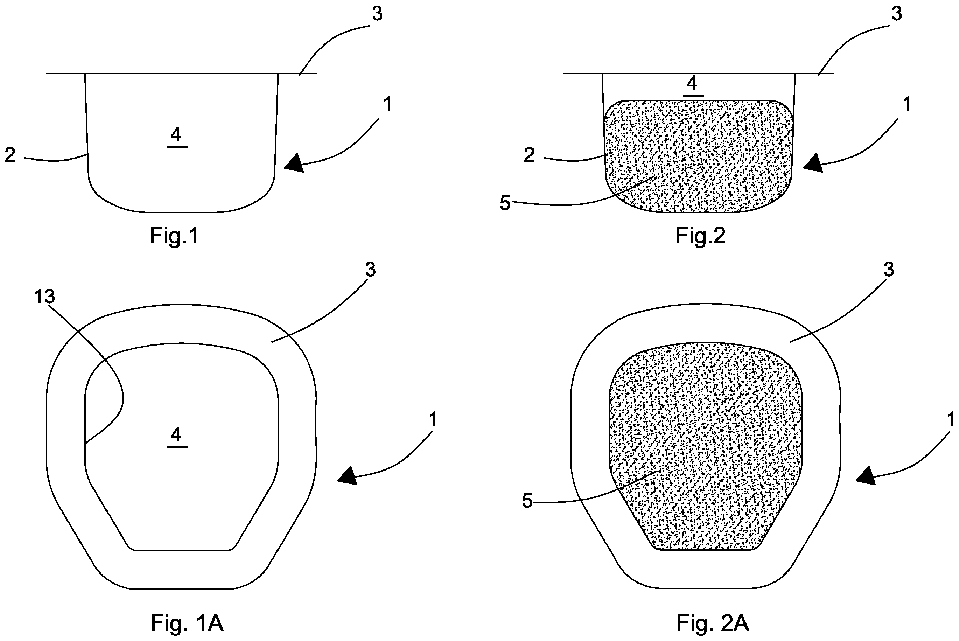

In Figures 1 and 1A a casing 1 is illustrated that is used for cooking hams by the method according to the present invention. The casing 1 is made by thermoforming starting from a sheet made of plastics for foodstuffs. The casing 1 is flexible and capable of being deformed. In other words, the casing 1 is not rigid.

The casing 1 comprises a saucepan-shaped body 2 inside which a cavity 4 is defined intended for receiving a ham 5 to be cooked (Figure 2). The cavity 4 communicates with the exterior through an opening 13 surrounded by a peripheral edge 3.

A ham 5 to be cooked is inserted into the cavity 4 through the opening 13 of the casing 1. Subsequently, an elastic pressure device 6, 6', 14 is arranged above the ham 5 to be cooked, the function of which will be explained in detail below.

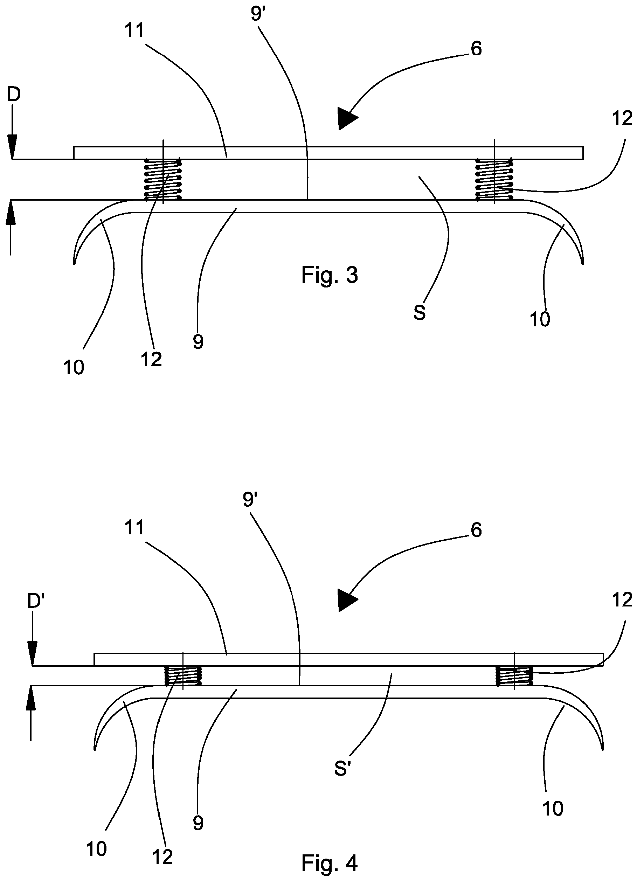

In Figures 3 and 4, a first embodiment is illustrated of an elastic pressure device 6 according to the invention.

The elastic pressure device 6 comprises a first plate 9, provided with a curved peripheral edge 10, which gives the first plate 9 a cup shape, and a second plate 11, for example flat. The first plate 9 and the second plate 11 are connected together by a plurality of elastic elements 12, for example coil springs, or Belleville washers, or gas springs, fixed to both the first plate 9 and to the second plate 11, which maintain the first plate 9 and the second plate 11 spaced apart from one another, so that a space S is defined therebetween. The elastic elements 12 are arranged between one side 9' of the first plate 9, opposite the curved peripheral edge 10, and the second plate 11.

The first plate 9, with the curved peripheral edge 10 thereof, has a shape and dimensions that are such as to adapt to the surface of the ham 5 inserted into the cavity 4 of the casing 1.

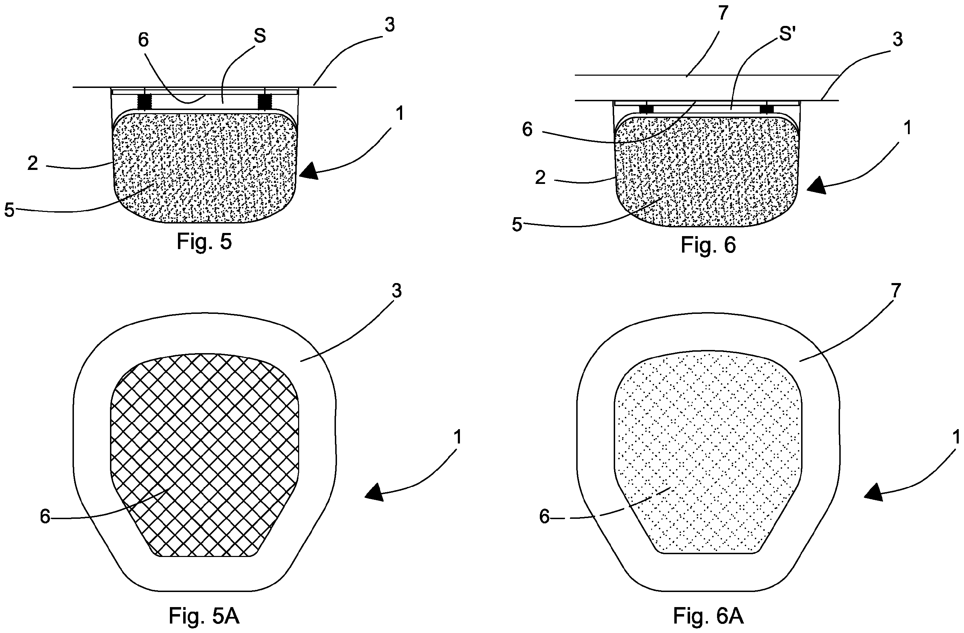

The elastic pressure device 6 is inserted into the cavity 4 of the casing 1 and arranged with the first plate 9 in contact with the surface of the ham 5 and with the second plate 11 facing the outside of the cavity 4 (Figure 5). Subsequently, the casing 1 is sealed by vacuum welding on the peripheral edge 3 a closing sheet 7 made of plastics for foodstuffs, preferably a sheet of the same plastics with which the casing 1 (Figure 6) was thermoformed. At the end of sealing, the elastic pressure device 6 is interposed between the ham 5 and the closing sheet 7.

During sealing of the casing 1, the vacuum is created inside the casing 1. Creating the vacuum inside the casing 1 means that the atmospheric pressure that acts on the casing 1 compresses the elastic pressure device, crushing the elastic elements 12 so that the distance between the first plate 9 and the second plate 11 is reduced from a value D (Figure 3) to a value D'<D (Figure 4) and, simultaneously, the space S between the first plate 9 and the second plate 11 is reduced. The reduced space between the first plate 9 and the second plate 11 is indicated by S' in the drawings.

The sealed casing 1 containing the ham 5 and the elastic pressure device 6 are then placed in a cooking device, in which the ham is cooked.

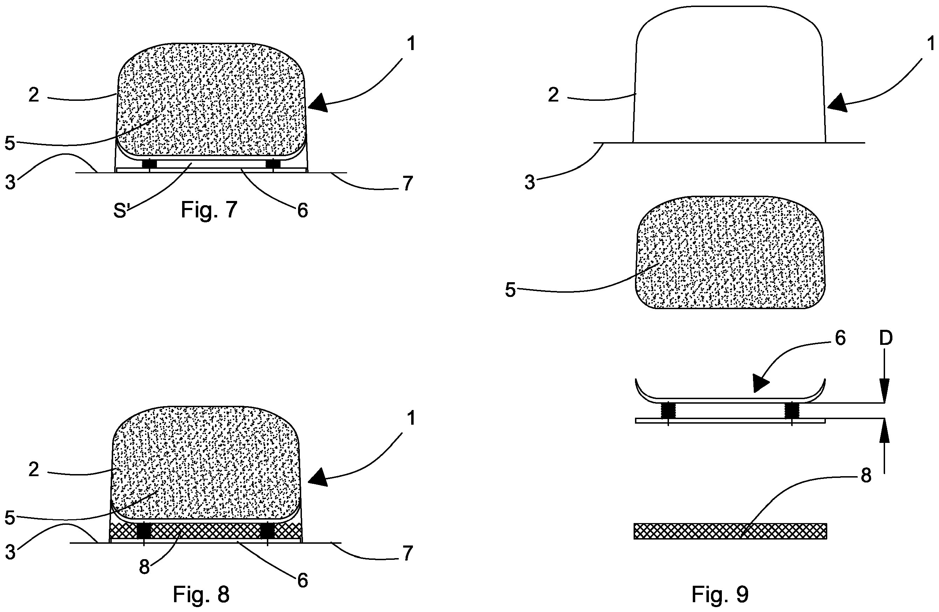

The casing 1 can be placed in the cooking device in an upturned position, i.e. with the closing sheet 7 facing downwards, in contact with a resting plane intended for supporting the ham 5, as shown in Figure 7. In this position, the elastic pressure device 6 is compressed not only by the atmospheric pressure acting on the casing 1 but also by the weight of the ham 5.

Alternatively, the casing 1 can be placed in the cooking device in a non-upturned position, i.e. with the closing sheet 7 facing upwards.

During cooking, steam develops from the ham 5, which progressively balances the atmospheric pressure acting on the casing 1 and, moreover, liquids 8 exit the ham 5 that collect in the space S defined between the first plate 9 and the second plate 11 of the elastic pressure device 6 (Figure 8). Simultaneously, the dimensions of the ham 5 decrease through the effect of the exit of the aforesaid liquids, which, as said previously, partially come from the brine that was injected into the ham 5 and partially come from the meat itself. This all results in the pressure on the elastic pressure device 6 decreasing, with the result that the elastic elements 12 can distend, increasing the distance between the first plate 9 and the second plate 10 and thus the dimensions of the space S in which the liquids 8 may collect that exit the ham 5.

At the end of cooking, after the ham 5 has cooled, the casing 1 is opened to extract the cooked ham 5 therefrom, the elastic pressure device 6 and the liquids 8 that have exited the ham 5 during cooking that, through the effect of cooling, have taken on a gelatinous consistency. During cooling, the elastic pressure device 6 maintains the liquids 8 separated from the ham 5, so that the liquids 8 cannot be reabsorbed by the ham 5, detracting from the quality of the product. This enables a high quality cooked ham to be obtained.

The liquids 8, which are now in gelatinous form, are separated from the ham and sent to be disposed of, whereas the elastic pressure device 6 is sent to a washing cycle, after which it is ready for subsequent use.

Lastly, the ham 5 is packaged and pasteurized, after which the ham is ready to be sold. From the moment the vacuum is created until the end of cooking, the elastic pressure device 6 exerts a pressure on the ham inside the casing 1.

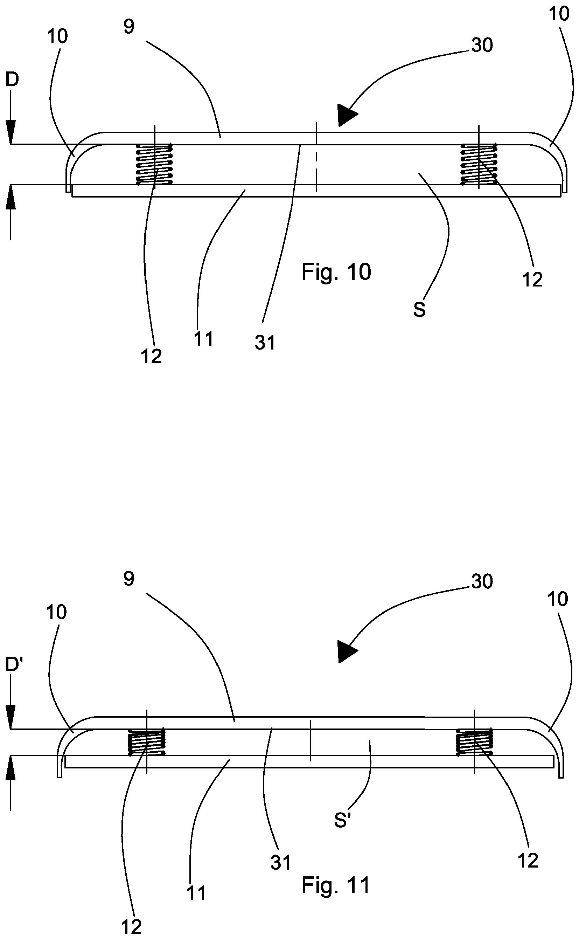

In Figures 10 and 11, a second embodiment is illustrated of an elastic pressure device 30 according to the invention.

The elastic pressure device 30, similarly to the elastic pressure device 6 disclosed previously, comprises a first plate 9, provided with a curved peripheral edge 10, which gives the first plate 9 a cup shape, and a second plate 11, which is for example flat. The first plate 9 and the second plate 11 are connected together by a plurality of elastic elements 12, for example coil springs, or Belleville washers, or gas springs, fixed both to the first plate 9 and to the second plate 11, which maintain the first plate 9 and the second plate 11 spaced apart from one another, so that a space S is defined therebetween. The elastic elements 12 are arranged between one side 31 of the first plate 9 adjacent to the curved peripheral edge 10, and the second plate 11.

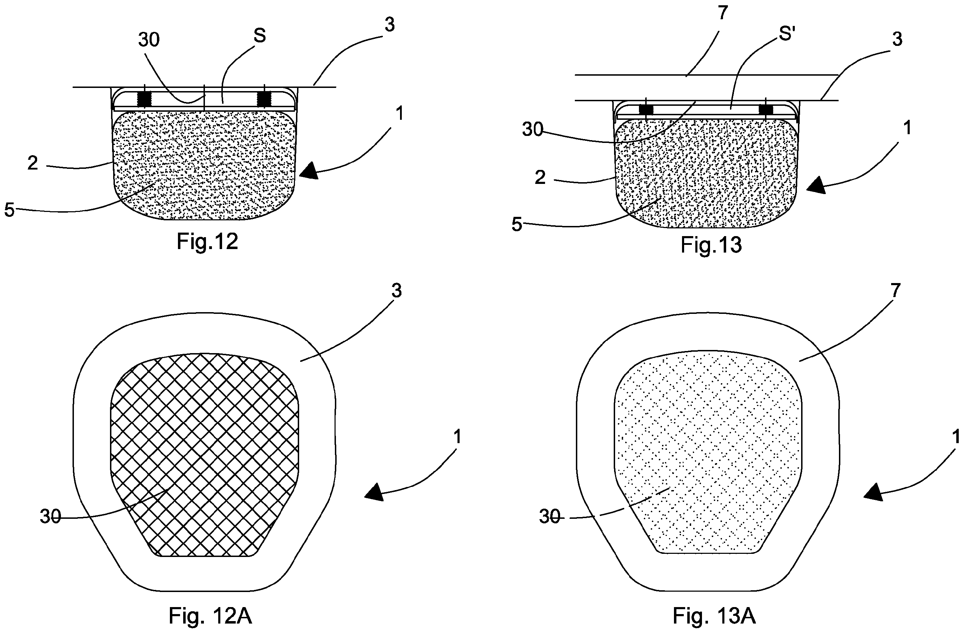

The elastic pressure device 30 is inserted into the cavity 4 of the casing 1, arranging the casing 1 with the second plate 11 in contact with the surface of the ham 5 and with the first plate 9 facing the outside of the cavity 4 (Figure 12). Subsequently, the casing 1 is sealed by vacuum welding on the peripheral edge 3 a closing sheet 7 made of plastics for foodstuffs, preferably a sheet of the same plastics with which the casing 1 (Figure 13) was thermoformed. At the end of sealing, the elastic pressure device 30 is interposed between the ham 5 and the closing sheet 7.

During sealing of the casing 1, the vacuum is created inside the casing 1. Creating the vacuum inside the casing 1 means that the atmospheric pressure that acts on the casing 1 compresses the elastic pressure device, crushing the elastic elements 12 so that the distance between the first plate 9 and the second plate 11 is reduced from a value D (Figure 10) to a value D'<D (Figure 11) and, simultaneously, the space S between the first plate 9 and the second plate 11 is reduced. The reduced space between the first plate 9 and the second plate 11 is indicated by S' in the drawings.

The sealed casing 1 containing the ham 5 and the elastic pressure device 30 is then placed in a cooking device, in which the ham is cooked.

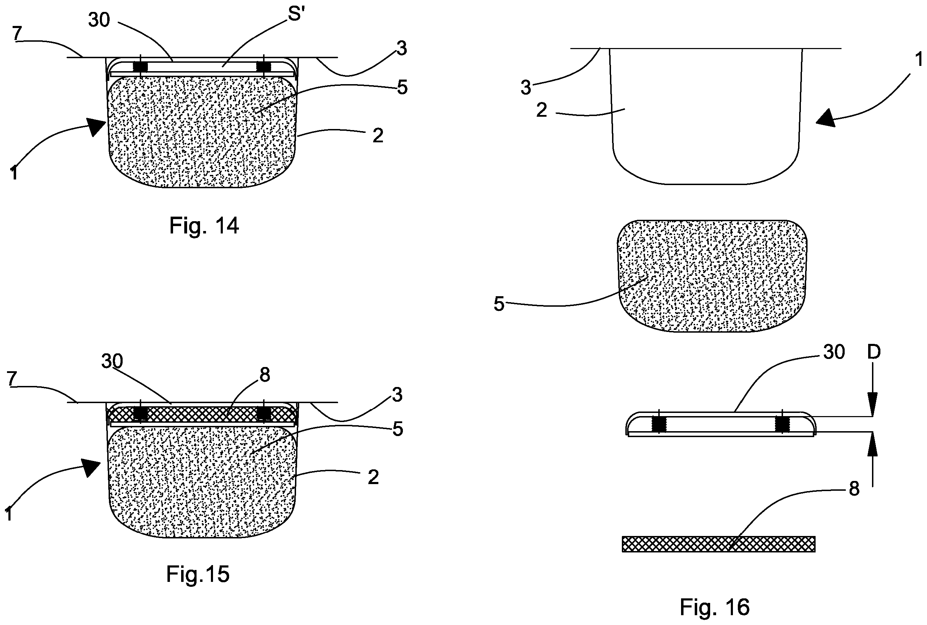

The casing 1 can be placed in the cooking device with the closing sheet 7 facing upwards, as shown in Figure 14, or in an upturned position, i.e. with the closing sheet 7 facing downwards, in contact with a resting plane intended for supporting the ham 5.

During cooking, steam develops from the ham 5, which progressively balances the atmospheric pressure acting on the casing 1 and, moreover, liquids 8 exit the ham 5 that collect in the space S defined between the first plate 9 and the second plate 11 of the elastic pressure device 30 (Figure 15). Simultaneously, the dimensions of the ham 5 decrease through the effect of the exit of the aforesaid liquids 8, which, as said previously, partially come from the brine that was injected into the ham 5 and partially come from the meat itself. This all results in the pressure on the elastic pressure device 30 decreasing, with the consequence that the elastic elements 12 can distend, increasing the distance between the first plate 9 and the second plate 10 and thus the dimensions of the space S in which the liquids 8 may collect that exit the ham 5.

At the end of cooking, after the ham 5 has cooled, the casing 1 is opened to extract the cooked ham 5 therefrom, the elastic pressure device 30 and the liquids 8 that have exited the ham 5 during cooking that, through the effect of cooling, have taken on a gelatinous consistency. During cooling, the elastic pressure device 30 maintains the liquids 8 separated from the ham 5, so that the liquids 8 cannot be reabsorbed by the ham 5, detracting from the quality of the product. This enables a high quality cooked ham to be obtained.

The liquids 8, which are now in gelatinous form, are separated from the ham and sent to be disposed of, whereas the elastic pressure device 30 is sent to a washing cycle, after which it is ready for subsequent use.

Lastly, the ham 5 is packaged and pasteurized, after which the ham is ready to be sold. From the moment the vacuum is created until the end of cooking, the elastic pressure device 30 exerts a pressure on the ham inside the casing 1.

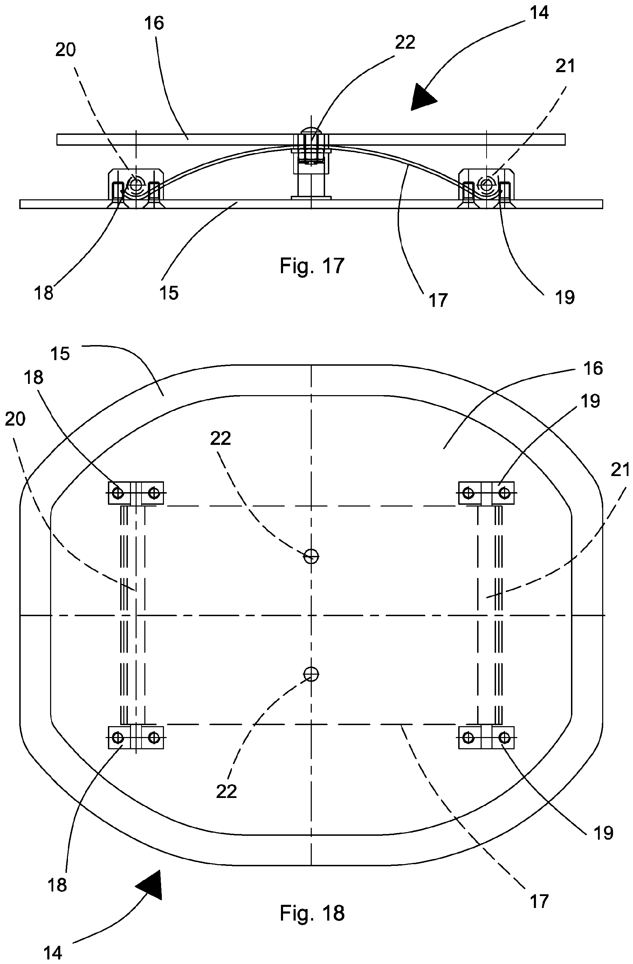

In Figures 17 to 22, a third embodiment is illustrated of an elastic pressure device 14 according to the invention.

The elastic pressure device 14 comprises a first plate 15, which is for example flat, and a second plate 16, which is also for example flat, which can have dimensions that are less than the dimensions of the first plate 15. Between the first plate 15 and the second plate 16 an elastic element 17 is interposed, for example a flat spring having a curved shape, with a first convex side 32 and a second concave side 33, opposite the first side 32. Two opposite ends 23 of the flat spring 17 are curved in the direction of the first convex side 32.

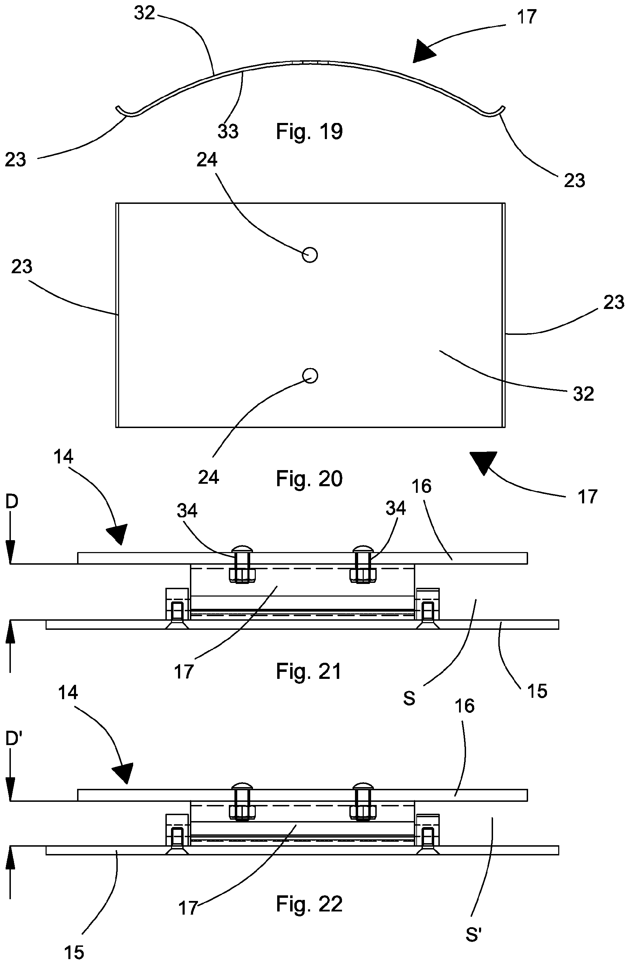

The flat spring 17 maintains the first plate 15 and the second plate 16 spaced apart from one another, so that a space S is defined therebetween (Figure 21).

The flat spring 17 is fixed on the second plate 16 by fixing elements 22, for example bolts or rivets, which are insertable into holes 24 of the flat spring 17 and into corresponding holes 34 of the second plate 16. The curved ends 23 of the flat spring 17 rest on the first plate 15. A first pair of support elements 18 is fixed to the first plate 15, between the first pair of support elements 18 a first pin 20 is supported, and a second pair of support elements 19 is fixed to the first plate 15, between the second pair of support elements 19 a second pin 21 is supported.

The flat spring 17 is so arranged that the ends 23 thereof are inserted, free to move, below the first pin 20 and the second pin 21. If the flat spring 17 is compressed, the ends 23 of the flat spring 17 can slide under the first pin 20 and the second pin 21, which maintain the ends 23 of the flat spring 17 in contact with the first plate 15.

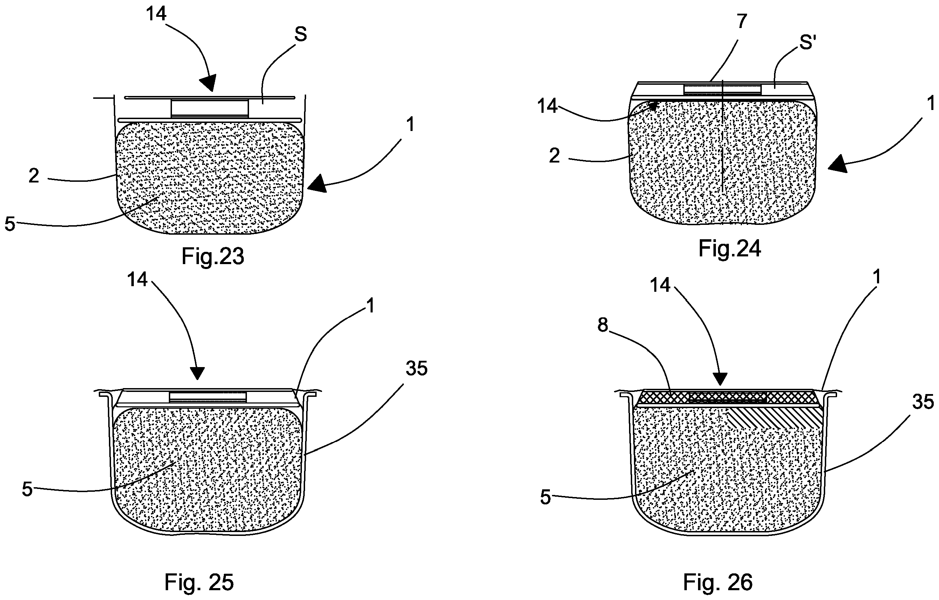

The elastic pressure device 14 is inserted into the cavity 4 of the casing 1, arranging the casing 1 with the first plate 15 in contact with the surface of the ham 5 and with the second plate 16 facing the outside of the cavity 4 (Figure 23). Subsequently, the casing 1 is sealed by vacuum welding thereupon a closing sheet 7 made of plastics for foodstuffs, preferably a sheet of the same plastics with which the casing 1 was thermoformed (Figure 24). At the end of sealing, the elastic pressure device 14 is interposed between the ham 5 and the closing sheet 7.

During sealing of the casing 1, the vacuum is created inside the casing 1. Creating the vacuum inside the casing 1 means that the atmospheric pressure that acts on the casing 1 compresses the elastic pressure device by crushing the flat spring 17 so that the distance between the first plate 15 and the second plate 16 is reduced from a value D (Figure 21) to a value D'<D (Figure 22) and, simultaneously, the space S between the first plate 15 and the second plate 16 is reduced. The reduced space between the first plate 15 and the second plate 16 is indicated by S' in the drawings.

The sealed casing 1 containing the ham 5 and the elastic pressure device 14 is then placed in a cooking device, in which the ham is cooked.

The casing 1 can be placed in the cooking device with the closing sheet 7 facing upwards, as shown in Figure 24, or in an upturned position, i.e. with the closing sheet 7 facing downwards, in contact with a resting plane intended for supporting the ham 5. Alternatively, the sealed casing 1 containing the ham 5 and the elastic pressure device 14 can be inserted into a cooking mould 35, which avoid shape variations of the ham 5 during cooking.

During cooking, steam develops from the ham 5, which progressively balances the atmospheric pressure acting on the casing 1 and, moreover, liquids 8 exit the ham 5 that collect in the space S defined between the first plate 15 and the second plate 16 of the elastic pressure device 14 (Figure 26). Simultaneously, the dimensions of the ham 5 decrease through the effect of the exit of the aforesaid liquids, which, as said previously, partially come from the brine that was injected into the ham 5 and partially come from the meat itself. This all results in the pressure on the elastic pressure device 14 decreasing, with the consequence that the flat spring 17 can distend, increasing the distance between the first plate 15 and the second plate 16 and thus the dimensions of the space S in which the liquids 8 may collect that exit the ham 5.

At the end of cooking, after cooling, the ham 5 is removed from the mould 35 and the casing 1 is opened to extract the cooked ham 5 therefrom, the elastic pressure device 14 and the liquids 8 that have exited the ham 5 during cooking that, through the effect of cooling, have taken on a gelatinous consistency. During cooling, the elastic pressure device 14 maintains the liquids 8 separated from the ham 5, so that the liquids 8 cannot be reabsorbed by the ham 5, detracting from the quality of the product. This enables a high quality cooked ham to be obtained.

The liquids 8, which are now in gelatinous form, are separated from the ham and sent to be disposed of, whereas the elastic pressure device 14 is sent to a washing cycle, after which it is ready for subsequent use.

Lastly, the ham 5 is packaged and pasteurized, after which the ham is ready to be sold. From the moment the vacuum is created until the end of cooking, the elastic pressure device 14 exerts a pressure on the ham inside the casing 1.

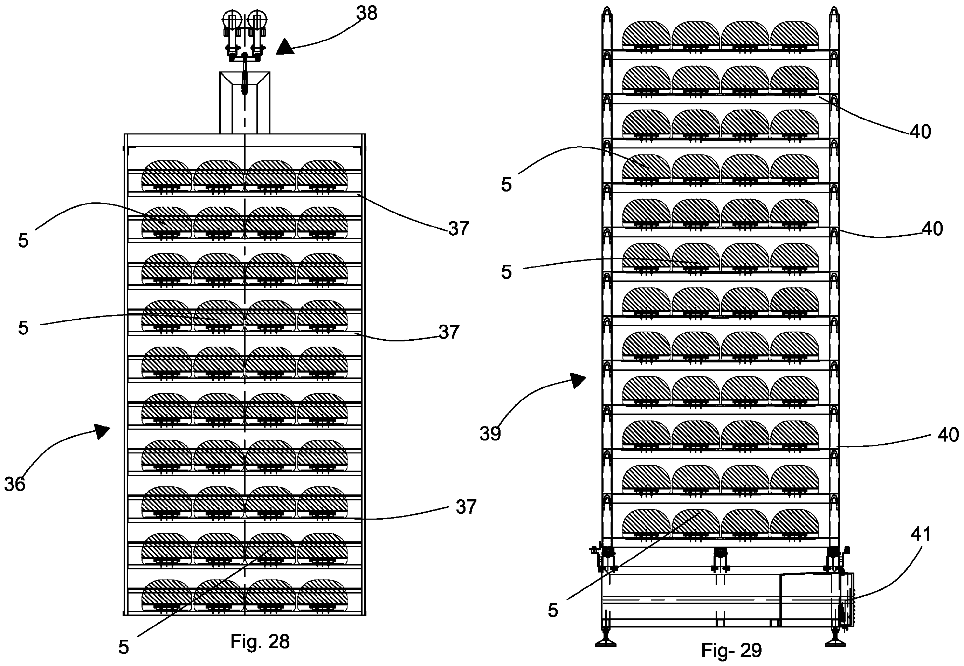

In Figure 28 a support frame 36 of the so-called "suspended rack" type is illustrated that is movable along an overhead rail 38, configured for supporting a plurality of hams 5 to be cooked.

The support frame 36 is provided with a plurality of trays 37 on which the hams 5 can be arranged. Each ham 5 is inserted into a respective sealed casing 1, inside which, between the ham 5 and the closing sheet 7 of the casing 1, an elastic pressure device 6, 14, 30 according to the invention is arranged. The hams 5 are arranged in an upturned position, i.e. with the closing sheet 7 of the casing 1 facing downwards, i.e. resting on the respective trays 37. Nevertheless, the hams 5 can also be arranged in a non-upturned position, i.e. with the closing sheet 7 facing upwards.

In figure 29, another support frame 39 is illustrated, which is movable on the ground by a catenary line 41, which is also configured to support a plurality of hams 5 to be cooked. Also the support frame 39 is provided with a plurality of trays 40 on which the hams 5 can be arranged to be cooked, each of which is arranged in a respective sealed casing 1, inside which an elastic pressure device 6, 14, 30 according to the invention is arranged.

The hams 5 are arranged on the trays 40 in an upturned manner, but can also be arranged in a non-upturned position.

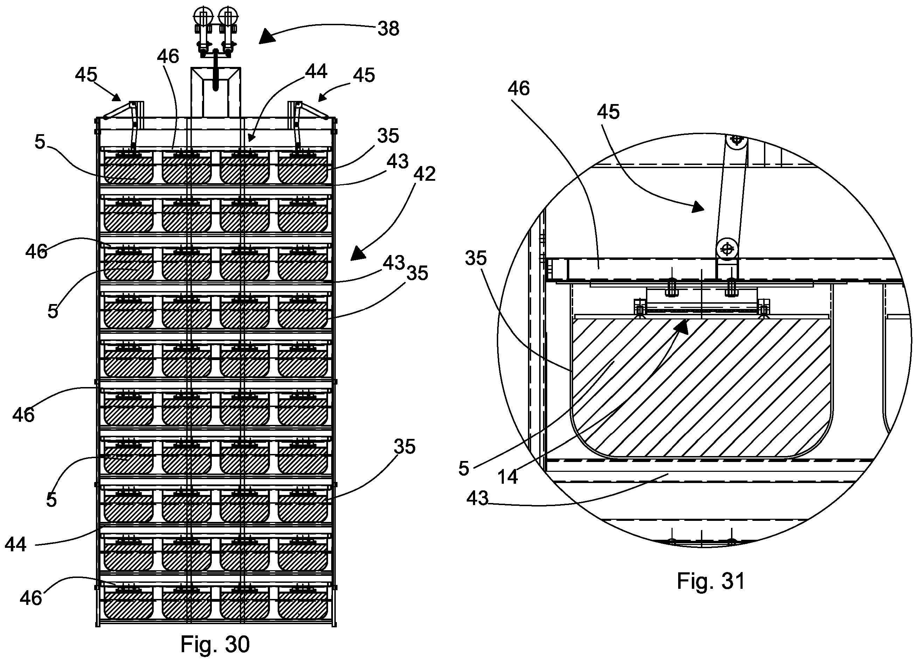

In Figure 30 a further support frame 42, for example of the "suspended tray" type is illustrated, which is similar to the frame 36 illustrated in Figure 28 and movable along an overhead rail 38.

The further support frame 42 is provided with a plurality of trays 43 on each of which a plurality of moulds 35 is arranged, each of which is configured to contain a ham 5 closed in a sealed casing 1, inside which an elastic pressure device 6, 14, 30, according to the invention is arranged.

The further support frame 42 comprises a movable frame element 44 provided with a series of further trays 46. The movable frame element 44 can be slided in both directions by articulated arms 45, in a direction that is perpendicular to the trays 43. The movable frame element 44 can move between a first position, illustrated in Figures 30 and 31, in which the further trays 46 rest on the moulds 35 acting as contrasting elements, which prevent the hams 5 expanding upwards during cooking, thus preventing the hams 5 being able to become deformed, and a second position (which is not shown) in which each of the further trays 46 is near a tray 43 thereabove, such that there is sufficient space between each further tray 46 and the tray 43 therebelow, to insert, or extract, the moulds 35.

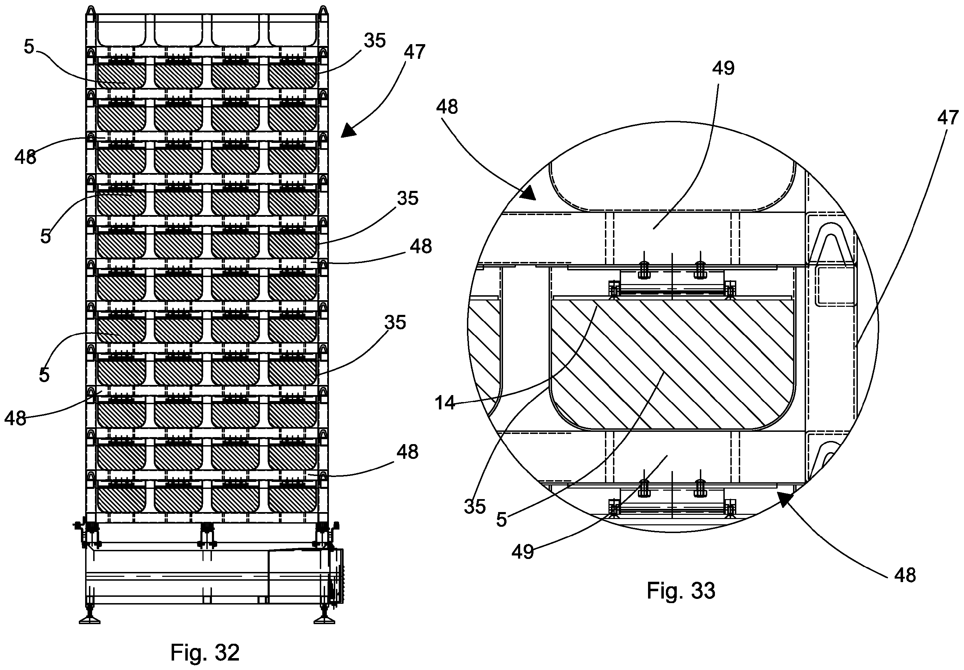

In figures 32 and 33 a still further support frame 47 is illustrated into which a plurality of mould elements 48 that are arranged on top of one another, each of which comprises a tray 49 to which a plurality of moulds 35 is fixed, each of which is configured to contain a ham 5 closed in a sealed casing 1, inside which an elastic pressure device 6, 14, 30, according to the invention is arranged.

The mould elements 48 are inserted into the still further frame 47 starting from the bottom, such that each mould element 48 can be inserted after the hams 5 have been inserted into the moulds 35 of the mould element 48 below.

The mould elements 48 are so arranged that the tray 49 of each mould element 48 rests on the moulds 35 of the mould element 48 below, acting as a contrasting element, which prevents the hams 5 expanding upwards during cooking, thus preventing the hams 5 getting deformed and thus damaged.

At the end of cooking of the hams 5, the mould elements 48 can be removed from the still further frame 47 starting from the top to be able to extract the hams 5 from the respective moulds 35.

## Claims

1. Method for cooking a ham (5) comprising the following steps:
- inserting the ham (5) to be cooked into a flexible and deformable casing (1) made of plastics for foodstuffs obtained by means of thermoforming;
- sealing the casing (1) by welding on the casing (1) a flexible and deformable closing sheet (7) made of plastics for foodstuffs obtained by means of thermoforming;
- creating a vacuum inside said casing (1) during said sealing;
- inserting the casing (1) with inside the ham (5) into a cooking device in which the ham is cooked,
**characterized in that**, before said sealing, inside the casing (1) an elastic pressure device (6; 14; 30) is inserted, such that after sealing of the casing (1), said elastic pressure device (6; 14; 30) is interposed between the ham (5) and said closing sheet (7), said elastic pressure device (6; 14; 30) comprising a first plate (9; 15) and a second plate (11, 16) between which at least one elastic element (12; 17) is interposed that is fixed to at least one of said first plate (9; 15) and said second plate (11; 16), wherein said at least one elastic element consists of a coil spring, or a Belleville washer, or a gas spring, or a flat spring having a curved shape, with a first convex side (32) and a second concave side (33), opposite the first side (32), wherein between said first plate (9; 15) and said second plate (11; 16) a space (S; S') is defined in which liquids (8) can collect that exit the ham (5) during cooking, wherein said elastic pressure device (6; 14; 30) exerts a pressure on said ham (5) during said cooking, wherein the dimensions of said space (S; S') may be increased or reduced.

2. Method according to claim 1 wherein said casing (1) with inside said ham (5) is inserted into said cooking device arranging the ham (5) on a resting surface, such that it rests with said closing sheet (7) on said resting surface.

3. Method according to claim 1, or 2, wherein said space (S; S') increases in dimensions during cooking of the ham (5).

4. Method according to any preceding claim, wherein, at the end of the cooking of the ham (5) and after cooling of the ham (5), the casing (1) is opened and the elastic pressure device (6), the cooked ham (5) and the liquid (8) that exited the ham and took on a gelatinous state on cooling, are extracted from the casing (1).

5. Method according to any preceding claim, wherein said elastic pressure device (6, 14, 30) is inserted into said casing (1), such that one of said first plate (9; 15) and said second plate (11; 16) is in contact with the ham (5).

6. Method according to any preceding claim and further comprising, after said sealing, arranging said ham (5) in a cooking mould (35).

7. Elastic pressure device, (6; 14; 30) configured for being inserted inside a casing (1), containing a ham (5) to be cooked, during cooking of the ham (5), **characterized in that** it comprises a first plate (9; 15) and a second plate (11; 16) and at least one elastic element (12; 17) fixed to at least one of said first plate (9; 15) and said second plate (11; 16), wherein said at least one elastic element (12; 17) is a coil spring, or a Belleville washer, or a gas spring, or a flat spring having a curved shape, with a first convex side (32) and a second concave side (33), opposite the first side (32), wherein said at least one elastic element (12; 17) maintains the first plate (9; 15) and the second plate (11; 16) spaced apart from one another, so that a space (S; S') is defined therebetween, said first plate (9; 15) or said second plate (11; 16) exerting a pressure on said ham (5) during said cooking.

8. Elastic pressure device (6; 30) according to claim 7, wherein said first plate (9) has a curved peripheral edge (10), said second plate (11) having a flat shape.

9. Elastic pressure device (6; 30) according to claim 7, or 8, wherein said at least one elastic element comprises a plurality of elastic elements fixed to said first plate (9) and to said second plate (11).

10. Elastic pressure device (6) according to claim 9, wherein said elastic elements (12) are arranged on one side (9') of the first plate (9), opposite the curved peripheral edge (10), and the second plate (11).

11. Elastic pressure device (30) according to claim 9, wherein said elastic elements (12) are arranged between a side (31) of the first plate (9), adjacent to the curved peripheral edge (10), and the second plate (11).

12. Elastic pressure device (14) according to claim 7, wherein said flat spring (17) is fixed to the second plate (16) by fixing elements (22) and rests on said first plate (15) with two opposite ends (23) thereof.

13. Elastic pressure device (14) according to claim 12, wherein each of said ends (23) is curved in the direction of said first convex side (32).

14. Elastic pressure device (14) according to claim 12, or 13, wherein on said first plate (15) a first pair of support elements (18) is fixed, between which a first pin (20) is supported, and a second pair of support elements (19) between which a second pin (21) is supported, said flat spring (17) being arranged in such a manner that said ends (23) are inserted, free to move, below the first pin (20) and the second pin (21).

15. Elastic pressure device (14) according to any one of claims 11 to 14, wherein said second plate (16) has smaller dimensions than the dimensions of said first plate (15).

## Patentansprüche

1. Verfahren zum Kochen eines Schinkens (5), das die folgenden Schritte aufweist:
- Einbringen des zu kochenden Schinkens (5) in eine durch Thermoformung erhaltene flexible und verformbare Umhüllung (1) aus Kunststoff für Lebensmittel;
- Verschließen der Umhüllung (1) durch Anschweißen einer flexiblen und verformbaren Verschlussfolie (7) aus Kunststoff für Lebensmittel, die durch Thermoformung erhalten wurde, an die Umhüllung (1);
- Erzeugen eines Vakuums im Inneren der Umhüllung (1) während des Verschließens;
- Einbringen der Umhüllung (1) mit dem darin befindlichen Schinken (5) in eine Kochvorrichtung, in der der Schinken gekocht wird,
**dadurch gekennzeichnet, dass** vor dem Verschließen in das Innere der Umhüllung (1) eine elastische Druckvorrichtung (6; 14; 30) eingebracht wird, so dass nach dem Verschließen der Umhüllung (1) die elastische Druckvorrichtung (6; 14; 30) zwischen dem Schinken (5) und der Verschlussfolie (7) angeordnet ist, wobei die elastische Druckvorrichtung (6; 14; 30) eine erste Platte (9; 15) und eine zweite Platte (11, 16) aufweist, zwischen denen zumindest ein elastisches Element (12; 17) angeordnet ist, das an zumindest einer der ersten Platte (9; 15) und der zweiten Platte (11; 16) befestigt ist, wobei das zumindest eine elastische Element aus einer Schraubenfeder oder einer Belleville-Scheibe oder einer Gasfeder oder einer flachen Feder besteht, mit einer gebogenen Form mit einer ersten konvexen Seite (32) und einer zweiten konkaven Seite (33), gegenüber der ersten Seite (32), wobei zwischen der ersten Platte (9; 15) und der zweiten Platte (11; 16) ein Raum (S; S') definiert ist, in dem sich Flüssigkeiten (8) sammeln können, die beim Kochen aus dem Schinken (5) austreten, wobei die elastische Druckvorrichtung (6; 14; 30) während des Kochens einen Druck auf den Schinken (5) ausübt, wobei die Abmessungen des Raumes (S; S') erhöht oder verringert werden können.

2. Verfahren gemäß Anspruch 1, wobei die Umhüllung (1) mit dem darin befindlichen Schinken (5) in die Kochvorrichtung eingebracht wird und der Schinken (5) so auf einer Ablagefläche angeordnet wird, dass er mit der Verschlussfolie (7) auf der Ablagefläche aufliegt.

3. Verfahren gemäß Anspruch 1 oder 2, wobei der Raum (S; S') während des Kochens des Schinkens (5) größer wird.

4. Verfahren gemäß einem der vorhergehenden Ansprüche, wobei am Ende des Kochens des Schinkens (5) und nach dem Abkühlen des Schinkens (5) die Umhüllung (1) geöffnet wird und die elastische Druckvorrichtung (6), der gekochte Schinken (5) und die Flüssigkeit (8), die aus dem Schinken austritt und beim Abkühlen einen gelatineartigen Zustand annimmt, aus der Umhüllung (1) entnommen werden.

5. Verfahren gemäß einem der vorhergehenden Ansprüche, wobei die elastische Druckvorrichtung (6, 14, 30) in die Umhüllung (1) eingesetzt wird, so dass entweder die erste Platte (9; 15) oder die zweite Platte (11; 16) in Kontakt mit dem Schinken (5) ist.

6. Verfahren gemäß einem der vorhergehenden Ansprüche, das nach dem Verschließen ferner das Anordnen des Schinkens (5) in einer Kochform (35) umfasst.

7. Elastische Druckvorrichtung (6; 14; 30), die zum Einbringen in eine Umhüllung (1) konfiguriert ist, die einen zu kochenden Schinken (5) enthält, während des Kochens des Schinkens (5), **dadurch gekennzeichnet, dass** sie eine erste Platte (9; 15) und eine zweite Platte (11; 16) und zumindest ein elastisches Element (12; 17) aufweist, das an zumindest einer der ersten Platte (9; 15) und der zweiten Platte (11; 16) befestigt ist, wobei das zumindest eine elastische Element (12; 17) eine Schraubenfeder oder eine Belleville-Scheibe oder eine Gasfeder oder eine flache Feder mit einer gekrümmten Form ist, mit einer ersten konvexen Seite (32) und einer zweiten konkaven Seite (33), gegenüber der ersten Seite (32), wobei das zumindest eine elastische Element (12; 17) die erste Platte (9; 15) und die zweite Platte (11; 16) auf Abstand voneinander hält, so dass ein Raum (S; S') dazwischen definiert ist, wobei die erste Platte (9; 15) oder die zweite Platte (11; 16) während des Kochens einen Druck auf den Schinken (5) ausübt.

8. Elastische Druckvorrichtung (6; 30) gemäß Anspruch 7, wobei die erste Platte (9) einen gekrümmten Umfangsrand (10) aufweist und die zweite Platte (11) eine flache Form aufweist.

9. Elastische Druckvorrichtung (6; 30) gemäß Anspruch 7 oder 8, wobei das zumindest eine elastische Element mehrere elastische Elemente aufweist, die an der ersten Platte (9) und an der zweiten Platte (11) befestigt sind.

10. Elastische Druckvorrichtung (6) gemäß Anspruch 9, wobei die elastischen Elemente (12) auf einer Seite (9') der ersten Platte (9), gegenüber dem gekrümmten Umfangsrand (10), und der zweiten Platte (11) angeordnet sind.

11. Elastische Druckvorrichtung (30) gemäß Anspruch 9, wobei die elastischen Elemente (12) zwischen einer an den gekrümmten Umfangsrand (10) angrenzenden Seite (31) der ersten Platte (9) und der zweiten Platte (11) angeordnet sind.

12. Elastische Druckvorrichtung (14) gemäß Anspruch 7, wobei die flache Feder (17) durch Befestigungselemente (22) an der zweiten Platte (16) befestigt ist und mit zwei gegenüberliegenden Enden (23) auf der ersten Platte (15) aufliegt.

13. Elastische Druckvorrichtung (14) gemäß Anspruch 12, wobei jedes der Enden (23) in Richtung der ersten konvexen Seite (32) gekrümmt ist.

14. Elastische Druckvorrichtung (14) gemäß Anspruch 12 oder 13, wobei an der ersten Platte (15) ein erstes Paar Stützelemente (18) befestigt ist, zwischen denen ein erster Stift (20) gelagert ist, und ein zweites Paar Stützelemente (19), zwischen denen ein zweiter Stift (21) gelagert ist, wobei die flache Feder (17) so angeordnet ist, dass ihre Enden (23) frei beweglich unterhalb des ersten Stifts (20) und des zweiten Stifts (21) eingebracht sind.

15. Elastische Druckvorrichtung (14) gemäß einem der Ansprüche 11 bis 14, wobei die zweite Platte (16) kleinere Abmessungen aufweist als die Abmessungen der ersten Platte (15).

## Revendications

1. Procédé pour la cuisson d'un jambon (5) comprenant les étapes suivantes :
- insérer le jambon (5) à faire cuire dans une enveloppe (1) flexible et déformable composée de matière plastique pour denrées alimentaires obtenue par thermoformage ;
- sceller l'enveloppe (1) en soudant sur l'enveloppe (1) un film de fermeture (7) flexible et déformable composé de matière plastique pour denrées alimentaires obtenue par thermoformage ;
- créer un vide à l'intérieur de ladite enveloppe (1) pendant ledit scellage ;
- insérer l'enveloppe (1), avec le jambon (5) à l'intérieur, dans un dispositif de cuisson dans lequel le jambon cuit,
**caractérisé en ce que**, avant ledit scellage, un dispositif de pression élastique (6 ; 14 ; 30) est inséré à l'intérieur de l'enveloppe (1) de telle sorte qu'après le scellage de l'enveloppe (1), ledit dispositif de pression élastique (6 ; 14 ; 30) se trouve entre le jambon (5) et ledit film de fermeture (7), ledit dispositif de pression élastique (6 ; 14 ; 30) comprenant une première plaque (9 ; 15) et une deuxième plaque (11, 16) entre lesquelles est placé au moins un élément élastique (12 ; 17) qui est fixé à l'une au moins de ladite première plaque (9 ; 15) et ladite deuxième plaque (11 ; 16), dans lequel ledit au moins un élément élastique consiste en un ressort hélicoïdal, ou une rondelle Belleville, ou un ressort à gaz, ou un ressort plat ayant une forme courbe, avec un premier côté convexe (32) et un deuxième côté concave (33), à l'opposé du premier côté (32), dans lequel est défini, entre ladite première plaque (9 ; 15) et ladite deuxième plaque (11 ; 16), un espace (S ; S') dans lequel peuvent être recueillis des liquides (8) qui sortent du jambon (5) pendant la cuisson, dans lequel ledit dispositif de pression élastique (6 ; 14 ; 30) exerce une pression sur ledit jambon (5) pendant ladite cuisson, dans lequel les dimensions dudit espace (S ; S') peuvent être augmentées ou réduites.

2. Procédé selon la revendication 1, dans lequel on insère ladite enveloppe (1) avec ledit jambon (5) à l'intérieur dans ledit dispositif de cuisson en disposant le jambon (5) sur une surface de repos de telle sorte qu'il repose avec ledit film de fermeture (7) sur ladite surface de repos.

3. Procédé selon la revendication 1, ou 2, dans lequel ledit espace (S ; S') augmente en dimensions pendant la cuisson du jambon (5).

4. Procédé selon l'une quelconque des revendications précédentes, dans lequel, à la fin de la cuisson du jambon (5) et après le refroidissement du jambon (5), on ouvre l'enveloppe (1) et on extrait de l'enveloppe (1) le dispositif de pression élastique (6), le jambon (5) cuit et le liquide (8) qui est sorti du jambon et a pris une forme gélatineuse en refroidissant.

5. Procédé selon l'une quelconque des revendications précédentes, dans lequel ledit dispositif de pression élastique (6, 14, 30) est inséré dans ladite enveloppe (1), de telle sorte que l'une de ladite première plaque (9 ; 15) et ladite deuxième plaque (11 ; 16) soit en contact avec le jambon (5).

6. Procédé selon l'une quelconque des revendications précédentes et comprenant en outre, après ledit scellage, disposer ledit jambon (5) dans un moule de cuisson (35).

7. Dispositif de pression élastique (6 ; 14 ; 30) configuré pour être inséré à l'intérieur d'une enveloppe (1), contenant un jambon (5) à faire cuire, pendant la cuisson du jambon (5), **caractérisé en ce qu'**il comprend une première plaque (9 ; 15) et une deuxième plaque (11 ; 16) et au moins un élément élastique (12 ; 17) fixé à l'une au moins de ladite première plaque (9 ; 15) et ladite deuxième plaque (11 ; 16), dans lequel ledit au moins un élément élastique (12 ; 17) est un ressort hélicoïdal, ou une rondelle Belleville, ou un ressort à gaz, ou un ressort plat ayant une forme courbe, avec un premier côté convexe (32) et un deuxième côté concave (33), à l'opposé du premier côté (32), dans lequel ledit au moins un élément élastique (12 ; 17) maintient la première plaque (9 ; 15) et la deuxième plaque (11 ; 16) espacées l'une de l'autre, de sorte qu'un espace (S ; S') est défini entre les deux, ladite première plaque (9 ; 15) ou ladite deuxième plaque (11 ; 16) exerçant une pression sur ledit jambon (5) pendant ladite cuisson.

8. Dispositif de pression élastique (6 ; 30) selon la revendication 7, dans lequel ladite première plaque (9) a un bord périphérique courbe (10), ladite deuxième plaque (11) ayant une forme plate.

9. Dispositif de pression élastique (6 ; 30) selon la revendication 7, ou 8, dans lequel ledit au moins un élément élastique comprend une pluralité d'éléments élastiques fixés à ladite première plaque (9) et à ladite deuxième plaque (11).

10. Dispositif de pression élastique (6) selon la revendication 9, dans lequel lesdits éléments élastiques (12) sont disposés sur un côté (9') de la première plaque (9), à l'opposé du bord périphérique courbe (10), et sur la deuxième plaque (11).

11. Dispositif de pression élastique (30) selon la revendication 9, dans lequel lesdits éléments élastiques (12) sont disposés entre un côté (31) de la première plaque (9), près du bord périphérique courbe (10), et la deuxième plaque (11).

12. Dispositif de pression élastique (14) selon la revendication 7, dans lequel ledit ressort plat (17) est fixé à la deuxième plaque (16) par des éléments de fixation (22) et repose sur ladite première plaque (15) avec deux extrémités opposées (23) de celui-ci.

13. Dispositif de pression élastique (14) selon la revendication 12, dans lequel chacune desdites extrémités (23) est courbée dans la direction dudit premier côté convexe (32).

14. Dispositif de pression élastique (14) selon la revendication 12, ou 13, dans lequel sur ladite première plaque (15) est fixée une première paire d'éléments de support (18) entre lesquels est supportée une première broche (20), et une deuxième paire d'éléments de support (19) entre lesquels est supportée une deuxième broche (21), ledit ressort plat (17) étant disposé de telle sorte que lesdites extrémités (23) soient insérées, libres de bouger, au-dessous de la première broche (20) et de la deuxième broche (21).

15. Dispositif de pression élastique (14) selon l'une quelconque des revendications 11 à 14, dans lequel ladite deuxième plaque (16) a des dimensions plus petites que les dimensions de ladite première plaque (15).
